# EUROPEAN PATENT APPLICATION

(11) **EP 4 418 709 A1**
(43) Date of publication of application: **21.08.2024**
(21) Application number: 24156504.3
(22) Date of filing: 08.02.2024
(51) Int. Cl.: H04W 8/18, H04W 88/06

(54) **COLLISION HANDLING BETWEEN MUSIM GAPS AND TYPE-1 MEASUREMENT GAP IN MOBILE COMMUNICATIONS**

(30) Priority: 15.02.2023 US 202363485012 P; 24.01.2024 US 202418420817
(71) Applicant: MediaTek Singapore Pte. Ltd., Singapore 138628 (SG)
(72) Inventor: TOMA, Ogeen Hanna Toma, Cambourne, Cambridge (GB); YU, Tsang-Wei, Hsinchu City (TW)
(74) Representative: Pfenning, Meinig & Partner mbB

(57) **Abstract**

Examples pertaining to collision handling between multi-Universal Subscriber Identity Module (multi-USIM or MUSIM) gaps and Type-1 measurement gap (MG) in mobile communications are described. A multiple-Universal Subscriber Identity Modules (MUSIM) user equipment (UE) determines that there is a collision between a Type-1 MG and at least one MUSIM gap. The MUSIM UE then prioritizes the Type-1 MG or the at least one MUSIM gap to keep one of the Type-1 MG and the at least one MUSIM gap while dropping the other of the Type-1 MG and the at least one MUSIM gap.

## Description

### CROSS REFERENCE TO RELATED PATENT APPLICATION(S)

The present disclosure is part of a non-provisional application claiming the priority benefit of U.S. Patent Application No. 63/485,012, filed 15 February 2023, the content of which herein being incorporated by reference in its entirety.

### TECHNICAL FIELD

The present disclosure is generally related to mobile communications and, more particularly, to collision handling between multi-Universal Subscriber Identity Module (multi-USIM or MUSIM) gaps and Type-1 measurement gap (MG) in mobile communications.

### BACKGROUND

Unless otherwise indicated herein, approaches described in this section are not prior art to the claims listed below and are not admitted as prior art by inclusion in this section.

In wireless communications, such as mobile communications under the 3^{rd} Generation Partnership Project (3GPP) standards including 5^{th} Generation (5G) New Radio (NR) and 4^{th} Generation (4G) Evolved Packet Service (EPS), when a user equipment (UE) implementation supports MUSIM (e.g., SIM #1 on network A and SIM #2 on network B), the UE may request MUSIM gaps from network A to monitor network B activities (e.g., paging, measurement, system information (SI) reading, and so on). The UE may be configured with up to four MUSIM gaps (including three periodic gaps and one aperiodic gap) for network B, and priority level may be introduced for the different MUSIM gaps. The UE may also be configured with a legacy MG for network A, either a Type-1 MG or a Type-2 MG. The Type-1 MG may be configured via GapConfig without suffix (according to Release 15/16 of the 3GPP Technical Specification). The Type-2 MG may be configured via GapConfig-r17 or ncsgind-r17 (according to Release 17 of the 3GPP Technical Specification). Type-1 MG has no priority nor association, while Type-2 MG has both. Accordingly, current MUSIM operation tends to create unpredictable measurement performance for network A.

As collisions between MUSIM gaps and the legacy MG can cause unpredictable measurement performance for network A, the UE is required to handle such collisions. On the one hand, collisions between the MUSIM gaps and Type-2 MG can be handled using priority rule since both MUSIM gaps and Type-2 MG can have priority levels. On the other hand, collisions between MUSIM gaps and Type-1 MG cannot be handled in the same way as for Type-2 MG since Type-1 MG has no priority level. Measurements on both network A and network B could be affected if there is no proper collision handling mechanism defined to handle collisions between MUSIM gaps and Type-1 MG. Therefore, there is a need for a solution of collision handling between MUSIM gaps and Type-1 MG in mobile communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is to propose schemes, concepts, designs, systems, methods and apparatus pertaining to collision handling between MUSIM gaps and Type-1 MG in mobile communications. It is believed that the above-described issue(s) would be avoided or otherwise alleviated by implementing one or more of the proposed schemes described herein.

In one aspect, a method may involve a processor of a MUSIM UE determining that there is a collision between a Type-1 MG and at least one MUSIM gap. The method may also involve the MUSIM UE prioritizing the Type-1 MG or the at least one MUSIM gap to keep one of the Type-1 MG and the at least one MUSIM gap while dropping the other of the Type-1 MG and the at least one MUSIM gap.

In another aspect, an apparatus may include a transceiver and a processor coupled to the transceiver. The transceiver may be configured to communicate wirelessly. The processor may determine that there is a collision between a Type-1 MG and at least one MUSIM gap. The processor may also prioritize the Type-1 MG or the at least one MUSIM gap to keep one of the Type-1 MG and the at least one MUSIM gap while dropping the other of the Type-1 MG and the at least one MUSIM gap.

It is noteworthy that, although description provided herein may be in the context of certain radio access technologies, networks and network topologies such as 5^{th} Generation System (5GS) and 4G EPS mobile networking, the proposed concepts, schemes and any variation(s)/derivative(s) thereof may be implemented in, for and by other types of wireless and wired communication technologies, networks and network topologies such as, for example and without limitation, Ethernet, Universal Terrestrial Radio Access Network (UTRAN), E-UTRAN, Global System for Mobile communications (GSM), General Packet Radio Service (GPRS)/Enhanced Data rates for Global Evolution (EDGE) Radio Access Network (GERAN), Long-Term Evolution (LTE), LTE-Advanced, LTE-Advanced Pro, IoT, Industrial IoT (IIoT), Narrow Band Internet of Things (NB-IoT), and any future-developed networking technologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a block diagram of an example communication system in accordance with an implementation of the present disclosure.
FIG. 5 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to collision handling between MUSIM gaps and Type-1 MG in mobile communications. According to the present disclosure, a number of possible solutions may be implemented separately or jointly. That is, although these possible solutions may be described below separately, two or more of these possible solutions may be implemented in one combination or another.

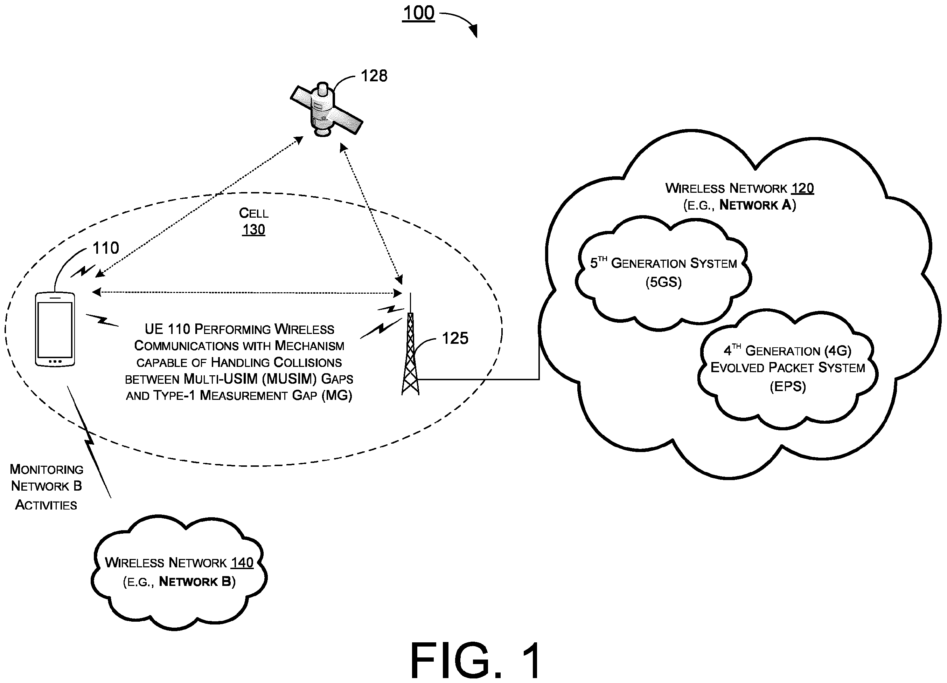

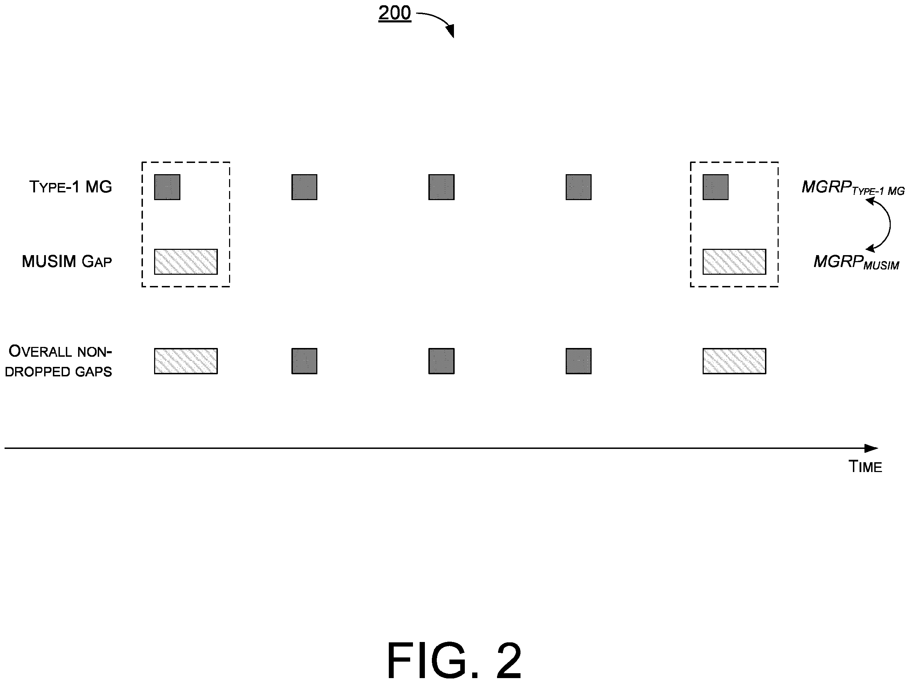

FIG. 1 illustrates an example network environment 100 in which various solutions and schemes in accordance with the present disclosure may be implemented. FIG. 2 ~ FIG. 5 illustrate examples of implementation of various proposed schemes in network environment 100 in accordance with the present disclosure. The following description of various proposed schemes is provided with reference to FIG. 1 ~ FIG. 5.

Referring to FIG. 1, network environment 100 may involve a UE 110 and a wireless network 120, which may include a 5^{th} Generation System (5GS) (and, optionally, an EPS). Depending on channel condition, availability and/or other factor(s), UE 110 may be in wireless communication with wireless network 120 via one or more terrestrial network nodes (e.g., base station(s) such as eNB, gNB and/or transmission/reception point (TRP)) and/or one or more non-terrestrial network nodes (e.g., satellite(s)). For simplicity in illustration and without limiting the scope of the present disclosure, UE 110 may be associated with or otherwise in communication with a cell 130 corresponding to a terrestrial network node 125 (e.g., gNB, eNB or TRP) and/or a non-terrestrial network node 128 (e.g., satellite) of wireless network 120. In the context of the present disclosure, there may be at least one other wireless network 140, which may be considered as network B while wireless network 120 may be considered as network A in the examples described herein. In network environment 100, UE 110 and wireless network 120 may implement various schemes pertaining to collision handling between MUSIM gaps and Type-1 MG in mobile communications in accordance with the present disclosure, as described below. It is noteworthy that, while the various proposed schemes may be individually or separately described below, in actual implementations each of the proposed schemes may be utilized individually or separately. Alternatively, some or all of the proposed schemes may be utilized jointly.

Under various proposed schemes in accordance with the present disclosure, one or more solutions may be adopted to handle the collisions between MUSIM gaps and Type-1 MG. Under a first proposed scheme (Solution #1), MUSIM gaps may always be prioritized over Type-1 MG. Under a second proposed scheme (Solution #2), Type-1 MG may always be prioritized over MUSIM gaps. Under a third proposed scheme (Solution #3), prioritization may be based on respective configurations of MUSIM gaps and Type-1 MG. Nevertheless, both Solution #1 and Solution #2 would not provide fairness in handling collisions between MUSIM gaps and Type-1 MG. That is, arguably a MUSIM gap could be deemed as being more important than Type-1 MG (e.g., for receiving paging in network B), or vice versa in that Type-1 MG could be deemed as being more important than MUSIM gaps (e.g., for critical measurements in network A). Thus, a fair solution such as Solution #3 may be preferred in handling such collisions without being biased to one side or the other.

Under the third proposed scheme (Solution #3), collisions between MUSIM gaps and Type-1 MG may be based on the configured periodicity, or measurement or MUSIM gap repetition periodicity (MGRP), of the colliding gaps. The colliding gap which has a larger or longer MGRP (meaning less opportunity) may be kept while the one with a smaller or shorter MGRP (meaning more opportunity) may be dropped. For instance, MUSIM gap(s) may be prioritized over Type-1 MG in an event that the MGRP of the MUSIM gap(s) in concern (MGRP_{MUSIM}) is greater than the MGRP of the Type-1 MG in concern (MGRP_{Type-1 MG}), which may be expressed as: prioritize MUSIM gap(s) in response to MGRP_{MUSIM} > MGRP_{Type-1 MG}. Similarly, Type-1 MG may be prioritized over MUSIM gap(s) in an event that the MGRP of the Type-1 MG in concern (MGRP_{Type-1 MG}) is greater than the MGRP of the MUSIM gap(s) in concern (MGRP_{MUSIM}), which may be expressed as: prioritize Type-1 MG in response to MGRP_{Type-1 MG} > MGRP_{MUSIM}. This proposed scheme does not depend on whether a gap in concern is a MUSIM gap or a Type-1 MG and, hence, this proposed scheme provides more fairness regarding which gap is to be kept or dropped based on the respective opportunity availability or frequency. This proposed scheme may be applied in different scenarios described below.

In view of the above, under various proposed schemes in accordance with the present disclosure, Solution #1 and Solution #2 may apply default prioritization, which may be simpler but not efficient and/or fair. In contrast, Solution #3 may provide a fair solution to handle collisions between MUSIM gaps and Type-1 MG by using the MGRP of the gaps as an indicator or factor to determine which one to prioritize. For instance, when a single periodic MUSIM gap collides with a Type-1 MG, the gap with the larger MGRP may be kept while the other may be dropped. When both MGRPs are the same, the MUSIM gap may be kept only if it is configured with the highest priority level (P1); otherwise, the Type-1 MG may be kept. Moreover, when multiple periodic MUSIM gaps collide with a Type-1 MG, the MGRP of the MUSIM gap with the highest priority level (herein referred to as the "winner MUSIM gap") may be compared with the MGRP of the Type-1 MG, and the gap with the larger MGRP may be kept while the other may be dropped. Furthermore, when an aperiodic MUSIM gap collides with a Type-1 MG, the aperiodic MUSIM gap may be kept and the Type-1 MG may be dropped since the aperiodic MUSIM gap is a single-shot gap.

FIG. 2 illustrates an example scenario 200 under a proposed scheme in accordance with the present disclosure. Scenario 200 may pertain to an example of a single periodic MUSIM gap colliding with a Type-1 MG. In scenario 200, a Type-1 MG may have a MGRP_{Type-1 MG} (shown as a first row of gaps in FIG. 2) and a MUSIM gap may have a MGRP_{MUSIM} (shown as a second row of gaps in FIG. 2), with MGRP_{MUSIM} > MGRP_{Type-1 MG}. That is, there are fewer instances of MUSIM gap in a given period of time than there are instances of Type-1 MG. Referring to FIG. 2, under Solution #3, whenever there is a collision between Type-1 MG and MUSIM gap, a comparison between MGRP_{Type-1 MG} and MGRP_{MUSIM} may be made, and the MUSIM gap may be kept while Type-1 MG may be dropped since MGRP_{MUSIM} > MGRP_{Type-1 MG}. The resultant non-dropped gaps are shown as a third row of gaps in FIG. 2.

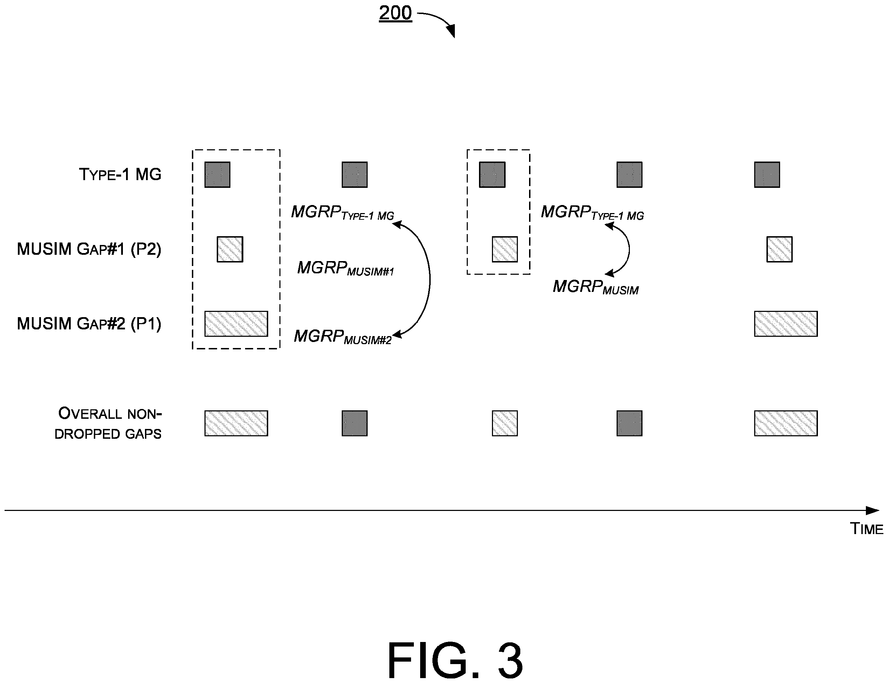

FIG. 3 illustrates an example scenario 300 under a proposed scheme in accordance with the present disclosure. Scenario 300 may pertain to an example of multiple periodic MUSIM gaps colliding with a Type-1 MG. In scenario 300, a Type-1 MG may have a MGRP_{Type-1 MG} (shown as a first row of gaps in FIG. 3), a first MUSIM gap (MUSIM gap #1) may have a MGRP_{MUSIM#1} (shown as a second row of gaps in FIG. 3) and a second MUSIM gap (MUSIM gap #2) may have a MGRP_{MUSIM#2} (shown as a third row of gaps in FIG. 3), with MGRP_{MUSIM#2} > MGRP_{MUSIM#1} > MGRP_{Type-1 MG}. That is, there are fewer instances of MUSIM gap #2 in a given period of time than there are instances of MUSIM gap #1, and there are fewer instances of MUSIM gap #1 in the given period of time than there are instances of Type-1 MG. Moreover, between MUSIM gap #1 and MUSIM gap #2, MUSIM gap #2 may have a first priority level (P1) which is higher than a second priority level (P2) of MUSIM gap #1.

Referring to FIG. 3, under Solution #3, when there is a collision among Type-1 MG, a comparison between MGRP_{Type-1 MG}, MGRP_{MUSIM#1} and MGRP_{MUSIM#2} may be made, and MUSIM gap #1 and MUSIM gap #2, the MUSIM gap #2 may be kept while MUSIM gap #1 and Type-1 MG may be dropped. This is because MGRP_{MUSIM#2} > MGRP_{MUSIM#1} > MGRP_{Type-1 MG} and because the first priority level P1 of MUSIM gap #2 is higher than the second priority level P2 of MUSIM gap #1. Additionally, when there is a collision between Type-1 MG and MUSIM gap #1, a comparison between MGRP_{Type-1 MG} and MGRP_{MUSIM#1} may be made, and the MUSIM gap #1 may be kept while Type-1 MG may be dropped, given that MGRP_{MUSIM#1} > MGRP_{Type-1 MG}. The resultant non-dropped gaps are shown as a third row of gaps in FIG. 3.

Under a proposed scheme in accordance with the present disclosure, when there is a collision between Type-1 MG and an aperiodic MUSIM gap, the aperiodic MUSIM gap may be prioritized over the Type-1 MG since the aperiodic MUSIM gap may be deemed as a single-shot gap (which occurs infrequently). That is, when there is a collision between Type-1 MG and an aperiodic MUSIM gap, the aperiodic MUSIM gap may be kept while the Type-1 MG may be dropped.

### Illustrative Implementations

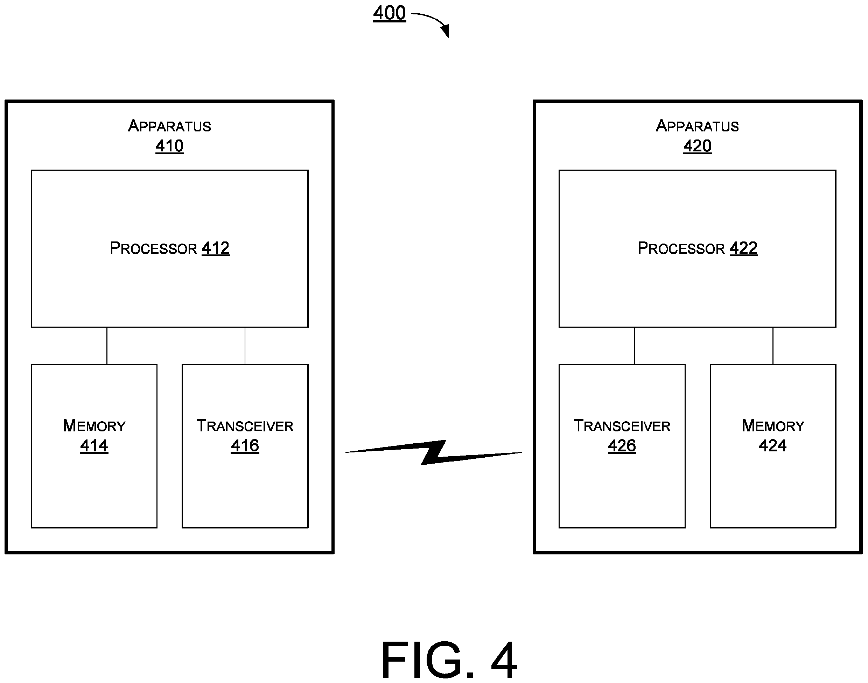

FIG. 4 illustrates an example communication system 400 having at least an example apparatus 410 and an example apparatus 420 in accordance with an implementation of the present disclosure. Each of apparatus 410 and apparatus 420 may perform various functions to implement schemes, techniques, processes and methods described herein pertaining to collision handling between MUSIM gaps and Type-1 MG in mobile communications, including the various schemes described above with respect to various proposed designs, concepts, schemes, systems and methods described above, including network environment 100, as well as processes described below.

Each of apparatus 410 and apparatus 420 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 410 and apparatus 420 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 410 and apparatus 420 may also be a part of a machine type apparatus, which may be an IoT apparatus such as an immobile or a stationary apparatus, a home apparatus, a roadside unit (RSU), a wire communication apparatus or a computing apparatus. For instance, each of apparatus 410 and apparatus 420 may be implemented in a smart thermostat, a smart fridge, a smart door lock, a wireless speaker or a home control center. When implemented in or as a network apparatus, apparatus 410 and/or apparatus 420 may be implemented in an eNodeB in an LTE, LTE-Advanced or LTE-Advanced Pro network or in a gNB or TRP in a 5G network, an NR network or an IoT network.

In some implementations, each of apparatus 410 and apparatus 420 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 410 and apparatus 420 may be implemented in or as a network apparatus or a UE. Each of apparatus 410 and apparatus 420 may include at least some of those components shown in FIG. 4 such as a processor 412 and a processor 422, respectively, for example. Each of apparatus 410 and apparatus 420 may further include one or more other components not pertinent to the proposed scheme of the present disclosure (e.g., internal power supply, display device and/or user interface device), and, thus, such component(s) of apparatus 410 and apparatus 420 are neither shown in FIG. 4 nor described below in the interest of simplicity and brevity.

In one aspect, each of processor 412 and processor 422 may be implemented in the form of one or more single-core processors, one or more multi-core processors, or one or more CISC or RISC processors. That is, even though a singular term "a processor" is used herein to refer to processor 412 and processor 422, each of processor 412 and processor 422 may include multiple processors in some implementations and a single processor in other implementations in accordance with the present disclosure. In another aspect, each of processor 412 and processor 422 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 412 and processor 422 is a special-purpose machine specifically designed, arranged and configured to perform specific tasks including those pertaining to collision handling between MUSIM gaps and Type-1 MG in mobile communications in accordance with various implementations of the present disclosure.

In some implementations, apparatus 410 may also include a transceiver 416 coupled to processor 412. Transceiver 416 may be capable of wirelessly transmitting and receiving data. In some implementations, transceiver 416 may be capable of wirelessly communicating with different types of wireless networks of different radio access technologies (RATs). In some implementations, transceiver 416 may be equipped with a plurality of antenna ports (not shown) such as, for example, four antenna ports. That is, transceiver 416 may be equipped with multiple transmit antennas and multiple receive antennas for multiple-input multiple-output (MIMO) wireless communications. In some implementations, apparatus 420 may also include a transceiver 426 coupled to processor 422. Transceiver 426 may include a transceiver capable of wirelessly transmitting and receiving data. In some implementations, transceiver 426 may be capable of wirelessly communicating with different types of UEs/wireless networks of different RATs. In some implementations, transceiver 426 may be equipped with a plurality of antenna ports (not shown) such as, for example, four antenna ports. That is, transceiver 426 may be equipped with multiple transmit antennas and multiple receive antennas for MIMO wireless communications.

In some implementations, apparatus 410 may further include a memory 414 coupled to processor 412 and capable of being accessed by processor 412 and storing data therein. In some implementations, apparatus 420 may further include a memory 424 coupled to processor 422 and capable of being accessed by processor 422 and storing data therein. Each of memory 414 and memory 424 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 414 and memory 424 may include a type of read-only memory (ROM) such as mask ROM, programmable ROM (PROM), erasable programmable ROM (EPROM) and/or electrically erasable programmable ROM (EEPROM). Alternatively, or additionally, each of memory 414 and memory 424 may include a type of non-volatile random-access memory (NVRAM) such as flash memory, solid-state memory, ferroelectric RAM (FeRAM), magnetoresistive RAM (MRAM) and/or phase-change memory. Alternatively, or additionally, each of memory 414 and memory 424 may include a UICC.

Each of apparatus 410 and apparatus 420 may be a communication entity capable of communicating with each other using various proposed schemes in accordance with the present disclosure. For illustrative purposes and without limitation, a description of capabilities of apparatus 410, as a UE (e.g., UE 110), and apparatus 420, as a network node (e.g., terrestrial network node 125 or non-terrestrial network node 128) of a wireless network (e.g., wireless network 120), is provided below in the context of example process 500.

### Illustrative Processes

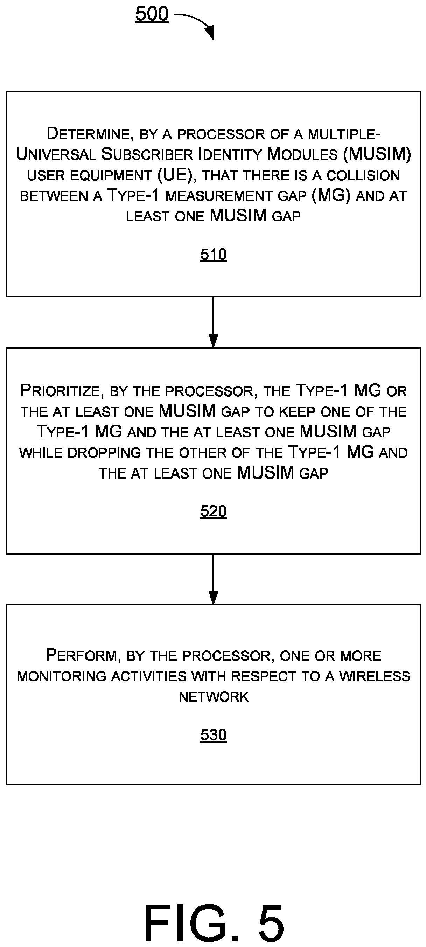

FIG. 5 illustrates an example process 500 in accordance with an implementation of the present disclosure. Process 500 may represent an aspect of implementing various proposed designs, concepts, schemes, systems and methods described above, whether partially or entirely, including those described above. More specifically, process 500 may represent an aspect of the proposed concepts and schemes pertaining to collision handling between MUSIM gaps and Type-1 MG in mobile communications. Process 500 may include one or more operations, actions, or functions as illustrated by one or more of blocks 510 and 520. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively, in a different order. Furthermore, one or more of the blocks/sub-blocks of process 500 may be executed iteratively. Process 500 may be implemented by or in apparatus 410 and apparatus 420 as well as any variations thereof. Solely for illustrative purposes and without limiting the scope, process 500 is described below in the context of apparatus 410 as a UE (e.g., UE 110) and apparatus 420 as a communication entity such as a network node or base station (e.g., terrestrial network node 125 or non-terrestrial network node 128) of a network (e.g., wireless network 120). Process 500 may begin at block 510.

At 510, process 500 may involve processor 412 of apparatus 410, implemented in or as a MUSIM UE (e.g., UE 110), determining that there is a collision between a Type-1 MG and at least one MUSIM gap. Process 500 may proceed from 510 to 520.

At 520, process 500 may involve processor 412 prioritizing the Type-1 MG or the at least one MUSIM gap to keep one of the Type-1 MG and the at least one MUSIM gap while dropping the other of the Type-1 MG and the at least one MUSIM gap. Process 500 may proceed from 520 to 530.

At 530, process 500 may involve processor 412 performing, via transceiver 416, one or more monitoring activities with respect to a wireless network.

In some implementations (e.g., Solution #1), in prioritizing the Type-1 MG or the at least one MUSIM gap, process 500 may involve processor 412 prioritizing the at least one MUSIM gap over the Type-1 MG.

In some implementations (e.g., Solution #2), in prioritizing the Type-1 MG or the at least one MUSIM gap, process 500 may involve processor 412 prioritizing the Type-1 MG over the at least one MUSIM gap.

In some implementations (e.g., Solution #3), in prioritizing the Type-1 MG or the at least one MUSIM gap, process 500 may involve processor 412 prioritizing either the Type-1 MG or the at least one MUSIM gap based on a respective measurement or MUSIM gap repetition periodicity (MGRP) and not based on a type of gap thereof.

In some implementations, the at least one MUSIM gap may include a single MUSIM gap. In such cases, in prioritizing the Type-1 MG or the single MUSIM gap, process 500 may involve processor 412 performing certain operations (e.g., Solution #3). For instance, process 500 may involve processor 412 comparing a MGRP of the Type-1 MG (MGRP_{Type-1 MG}) and a MGRP of the single MUSIM gap (MGRP_{MUSIM}). Moreover, process 500 may involve processor 412 prioritizing the Type-1 MG and the single MUSIM gap based on a result of the comparing. In some implementations, in prioritizing the Type-1 MG and the single MUSIM gap based on the result of the comparing, process 500 may involve processor 412 performing certain operations. For instance, process 500 may involve processor 412 prioritizing the single MUSIM gap over the Type-1 MG responsive to MGRP_{MUSIM} > MGRP_{Type-1 MG}. Alternatively, process 500 may involve processor 412 prioritizing the Type-1 MG over the single MUSIM gap responsive to MGRP_{Type-1 MG} > MGRP_{MUSIM}. Alternatively, or additionally, in prioritizing the Type-1 MG and the single MUSIM gap based on the result of the comparing, process 500 may involve processor 412 performing certain operations. For instance, process 500 may involve processor 412 prioritizing the single MUSIM gap over the Type-1 MG responsive to MGRP_{MUSIM} = MGRP_{Type-1 MG} and the single MUSIM gap being configured with a highest priority level. Alternatively, process 500 may involve processor 412 prioritizing the Type-1 MG over the single MUSIM gap responsive to MGRP_{Type-1 MG} = MGRP_{MUSIM} and the single MUSIM gap being not configured with the highest priority level.

In some implementations, the at least one MUSIM gap may include at least a first MUSIM gap and a second MUSIM gap. In such cases, in prioritizing the Type-1 MG or the at least one MUSIM gap in an event that there is a collision among the Type-1 MG, the first MUSIM gap and the second MUSIM gap, process 500 may involve processor 412 performing certain operations (e.g., Solution #3). For instance, process 500 may involve processor 412 comparing a MUSIM gap repetition periodicity (MGRP) of the first MUSIM gap (MGRP_{MUSIM#1}) and a MGRP of the second MUSIM gap (MGRP_{MUSIM#2}) to identify one of the first MUSIM gap and the second MUSIM gap as a winner MUSIM gap which has a higher priority level. Additionally, process 500 may involve processor 412 comparing a MGRP of the Type-1 MG (MGRP_{Type-1 MG}) and the MGRP of the winner MUSIM gap, which is either the MGRP_{MUSIM#1} or the MGRP_{MUSIM#2}. Moreover, process 500 may involve processor 412 prioritizing the Type-1 MG and the winner MUSIM gap based on a result of the comparing.

In some implementations, the at least one MUSIM gap may include at least a first MUSIM gap and a second MUSIM gap. In such cases, in prioritizing the Type-1 MG or the at least one MUSIM gap in an event that there is a collision between the Type-1 MG and one of the first MUSIM gap and the second MUSIM gap, process 500 may involve processor 412 performing certain operations (e.g., Solution #3). For instance, process 500 may involve processor 412 comparing a measurement gap repetition periodicity (MGRP) of the Type-1 MG (MGRP_{Type-1 MG}) and a MGRP of the one of the first MUSIM gap and the second MUSIM gap (MGRP_{MUSIM#1} or MGRP_{MUSIM#2}) which collides with the Type-1 MG. Furthermore, process 500 may involve processor 412 prioritizing the Type-1 MG and the one of the first MUSIM gap and the second MUSIM gap based on a result of the comparing.

In some implementations, the at least one MUSIM gap comprises an aperiodic MUSIM gap. In such cases, in prioritizing the Type-1 MG or the at least one MUSIM gap, process 500 may involve processor 412 prioritizing the aperiodic MUSIM gap over the Type-1 MG.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. A method, comprising:
determining, by a processor of a multiple-Universal Subscriber Identity Modules (MUSIM) user equipment (UE), that there is a collision between a Type-1 measurement gap (MG) and at least one MUSIM gap; and
prioritizing, by the processor, the Type-1 MG or the at least one MUSIM gap to keep one of the Type-1 MG and the at least one MUSIM gap while dropping the other of the Type-1 MG and the at least one MUSIM gap.

2. The method of Claim 1, wherein the prioritizing of the Type-1 MG or the at least one MUSIM gap comprises prioritizing the at least one MUSIM gap over the Type-1 MG.

3. The method of any one of Claims 1 or 2, wherein the prioritizing of the Type-1 MG or the at least one MUSIM gap comprises prioritizing the Type-1 MG over the at least one MUSIM gap.

4. The method of any one of Claims 1 to 3, wherein the prioritizing of the Type-1 MG or the at least one MUSIM gap comprises prioritizing either the Type-1 MG or the at least one MUSIM gap based on a respective measurement or MUSIM gap repetition periodicity (MGRP) and not based on a type of gap thereof.

5. The method of any one of Claims 1 to 4, wherein the at least one MUSIM gap comprises a single MUSIM gap, and wherein the prioritizing of the Type-1 MG or the single MUSIM gap comprises:
comparing a measurement gap repetition periodicity (MGRP) of the Type-1 MG (MGRP_{Type-1 MG}) and a MGRP of the single MUSIM gap (MGRP_{MUSIM}); and
prioritizing the Type-1 MG and the single MUSIM gap based on a result of the comparing.

6. The method of Claim 5, wherein the prioritizing of the Type-1 MG and the single MUSIM gap based on the result of the comparing comprises:
prioritizing the single MUSIM gap over the Type-1 MG responsive to MGRP_{MUSIM} > MGRP_{Type-1 MG}; or
prioritizing the Type-1 MG over the single MUSIM gap responsive to MGRP_{Type-1 MG} > MGRP_{MUSIM}.

7. The method of any one of Claims 5 or 6, wherein the prioritizing of the Type-1 MG and the single MUSIM gap based on the result of the comparing comprises:
prioritizing the single MUSIM gap over the Type-1 MG responsive to MGRP_{MUSIM} = MGRP_{Type-1 MG} and the single MUSIM gap being configured with a highest priority level; or
prioritizing the Type-1 MG over the single MUSIM gap responsive to MGRP_{Type-1 MG} = MGRP_{MUSIM} and the single MUSIM gap being not configured with the highest priority level.

8. The method of any one of Claims 1 to 7, wherein the at least one MUSIM gap comprises at least a first MUSIM gap and a second MUSIM gap, and wherein the prioritizing of the Type-1 MG or the at least one MUSIM gap in an event that there is a collision among the Type-1 MG, the first MUSIM gap and the second MUSIM gap comprises:
comparing a measurement gap repetition periodicity (MGRP) of the first MUSIM gap (MGRP_{MUSIM#1}) and a MGRP of the second MUSIM gap (MGRP_{MUSIM#2}) to identify one of the first MUSIM gap and the second MUSIM gap as a winner MUSIM gap which has a higher priority level;
comparing a MGRP of the Type-1 MG (MGRP_{Type-1 MG}) and the MGRP of the winner MUSIM gap, which is either the MGRP_{MUSIM#1} or the MGRP_{MUSIM#2}, and
prioritizing the Type-1 MG and the winner MUSIM gap based on a result of the comparing;
and/or wherein the at least one MUSIM gap comprises at least a first MUSIM gap and a second MUSIM gap, and wherein the prioritizing of the Type-1 MG or the at least one MUSIM gap in an event that there is a collision between the Type-1 MG and one of the first MUSIM gap and the second MUSIM gap comprises:
comparing a measurement gap repetition periodicity (MGRP) of the Type-1 MG (MGRP_{Type-1 MG}) and a MGRP of the one of the first MUSIM gap and the second MUSIM gap (MGRP_{MUSIM#1} or MGRP_{MUSIM#2}) which collides with the Type-1 MG; and
prioritizing the Type-1 MG and the one of the first MUSIM gap and the second MUSIM gap based on a result of the comparing;
and/or wherein the at least one MUSIM gap comprises an aperiodic MUSIM gap, and wherein the prioritizing of the Type-1 MG or the at least one MUSIM gap comprises prioritizing the aperiodic MUSIM gap over the Type-1 MG.

9. An apparatus implementable in a multiple-Universal Subscriber Identity Modules (MUSIM) user equipment (UE), comprising:
a transceiver which, during operation, communicates wirelessly; and
a processor coupled to the transceiver and which, during operation, performs operations comprising:
determining that there is a collision between a Type-1 measurement gap (MG) and at least one MUSIM gap; and
prioritizing the Type-1 MG or the at least one MUSIM gap to keep one of the Type-1 MG and the at least one MUSIM gap while dropping the other of the Type-1 MG and the at least one MUSIM gap.

10. The apparatus of Claim 9, wherein the prioritizing of the Type-1 MG or the at least one MUSIM gap comprises prioritizing the at least one MUSIM gap over the Type-1 MG.

11. The apparatus of any one of Claims 9 or 10, wherein the prioritizing of the Type-1 MG or the at least one MUSIM gap comprises prioritizing the Type-1 MG over the at least one MUSIM gap.

12. The apparatus of any one of Claims 9 to 11, wherein the prioritizing of the Type-1 MG or the at least one MUSIM gap comprises prioritizing either the Type-1 MG or the at least one MUSIM gap based on a respective measurement or MUSIM gap repetition periodicity (MGRP) and not based on a type of gap thereof.

13. The apparatus of any one of Claims 9 to 12, wherein the at least one MUSIM gap comprises a single MUSIM gap, and wherein the prioritizing of the Type-1 MG or the single MUSIM gap comprises:
comparing a measurement gap repetition periodicity (MGRP) of the Type-1 MG (MGRP_{Type-1 MG}) and a MGRP of the single MUSIM gap (MGRP_{MUSIM}); and
prioritizing the Type-1 MG and the single MUSIM gap based on a result of the comparing.

14. The apparatus of Claim 13, wherein the prioritizing of the Type-1 MG and the single MUSIM gap based on the result of the comparing comprises:
prioritizing the single MUSIM gap over the Type-1 MG responsive to MGRP_{MUSIM} > MGRP_{Type-1 MG}; or
prioritizing the Type-1 MG over the single MUSIM gap responsive to MGRP_{Type-1 MG} > MGRP_{MUSIM};
and/or wherein the prioritizing of the Type-1 MG and the single MUSIM gap based on the result of the comparing comprises:
prioritizing the single MUSIM gap over the Type-1 MG responsive to MGRP_{MUSIM} = MGRP_{Type-1 MG} and the single MUSIM gap being configured with a highest priority level; or
prioritizing the Type-1 MG over the single MUSIM gap responsive to MGRP_{Type-1 MG} = MGRP_{MUSIM} and the single MUSIM gap being not configured with the highest priority level.

15. The apparatus of any one of Claims 9 to 14, wherein the at least one MUSIM gap comprises at least a first MUSIM gap and a second MUSIM gap, and wherein the prioritizing of the Type-1 MG or the at least one MUSIM gap in an event that there is a collision among the Type-1 MG, the first MUSIM gap and the second MUSIM gap comprises:
comparing a measurement gap repetition periodicity (MGRP) of the first MUSIM gap (MGRP_{MUSIM#1}) and a MGRP of the second MUSIM gap (MGRP_{MUSIM#2}) to identify one of the first MUSIM gap and the second MUSIM gap as a winner MUSIM gap which has a higher priority level;
comparing a MGRP of the Type-1 MG (MGRP_{Type-1 MG}) and the MGRP of the winner MUSIM gap, which is either the MGRP_{MUSIM#1} or the MGRP_{MUSIM#2}, and
prioritizing the Type-1 MG and the winner MUSIM gap based on a result of the comparing;
and/or wherein the at least one MUSIM gap comprises at least a first MUSIM gap and a second MUSIM gap, and wherein the prioritizing of the Type-1 MG or the at least one MUSIM gap in an event that there is a collision between the Type-1 MG and one of the first MUSIM gap and the second MUSIM gap comprises:
comparing a measurement gap repetition periodicity (MGRP) of the Type-1 MG (MGRP_{Type-1 MG}) and a MGRP of the one of the first MUSIM gap and the second MUSIM gap (MGRP_{MUSIM#1} or MGRP_{MUSIM#2}) which collides with the Type-1 MG; and
prioritizing the Type-1 MG and the one of the first MUSIM gap and the second MUSIM gap based on a result of the comparing;
and/or wherein the at least one MUSIM gap comprises an aperiodic MUSIM gap, and wherein the prioritizing of the Type-1 MG or the at least one MUSIM gap comprises prioritizing the aperiodic MUSIM gap over the Type-1 MG.
